# EUROPEAN PATENT APPLICATION

(11) **EP 4 020 687 A1**
(43) Date of publication of application: **29.06.2022**
(21) Application number: 21853543.3
(22) Date of filing: 21.07.2021
(51) Int. Cl.: H01M 50/20, H01M 50/24, H01M 10/653, H01M 10/647

(54) **BATTERY MODULE, BATTERY PACK INCLUDING SAME, AND METHOD FOR TRANSPORTING BATTERY MODULE**

(30) Priority: 05.08.2020 KR 20200097867; 20.07.2021 KR 20210094712
(71) Applicant: LG ENERGY SOLUTION, LTD., Seoul 07335 (KR)
(72) Inventor: PARK, Won Kyoung, Daejeon 34122 (KR); SEONG, Junyeob, Daejeon 34122 (KR); PARK, Subin, Daejeon 34122 (KR)
(74) Representative: Plasseraud IP
(86) International application number: PCT/KR2021/009372
(87) International publication number: WO 2022/030821

(57) **Abstract**

A battery module according to one embodiment of the present disclosure includes a battery cell stack that is formed by stacking a plurality of battery cells, an insulating cover that covers both end parts of the battery cell stack, a holding member that wraps both end parts of the battery cell stack adjacent to the insulating cover, and an adhesive member that is disposed on an upper surface of the battery cell stack.

## Description

### [TECHNICAL FIELD]

### Cross Citation with Related Applications)

This application claims the benefit of Korean Patent Application No. 10-2020-0097867 filed on August 5, 2020 and Korean Patent Application No. 10-2021-0094712 filed on July 20, 2021 in the Korean Intellectual Property Office, the disclosures of which are incorporated herein by reference in their entirety.

The present disclosure relates to a battery module, a battery pack including the same and a method of transporting the battery module, and more particularly, to a battery module with enhanced adsorption power, a battery pack including the same and a method of transporting the battery module.

### [BACKGROUND]

With the increase of the technological development and demand for a mobile device, demand for a secondary battery as an energy source is rapidly increasing. Accordingly, many researches of the battery capable of meeting a variety of needs are emerging.

A secondary battery has attracted considerable attention as an energy source for powerdriven devices, such as an electric bicycle, an electric vehicle, and a hybrid electric vehicle, as well as an energy source for mobile devices, such as a mobile phone, a digital camera, and a laptop computer.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, in order to protect the battery cell stack from external impact, heat or vibration, the battery module may include a module frame in which a front surface and back surface are opened to house the battery cell stack in an internal space.

In the process of manufacturing a battery module or the process of manufacturing a battery pack including the battery module, a step of transporting the battery cell stack included in the battery module can be performed. At this time, since the number of battery cells included in the middle or large-sized battery module increases and the weight increases, the risk of falling down of the battery module in the process of transporting the battery module may increase.

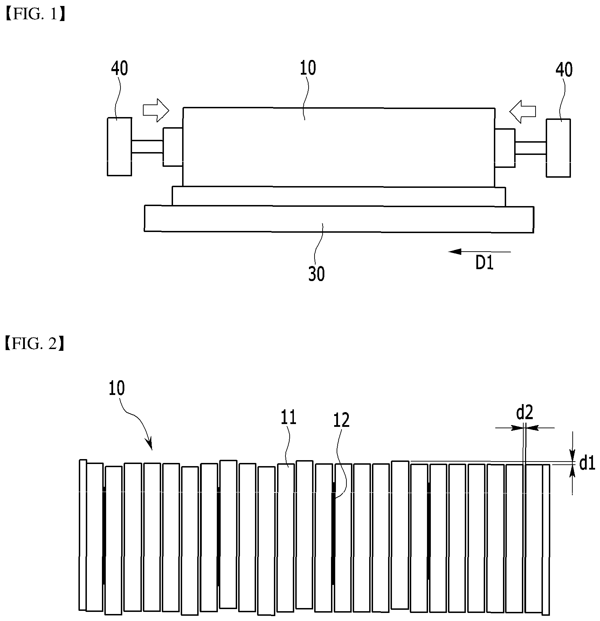

Fig. 1 is a view for explaining a method for transporting a battery cell assembly included in a conventional battery module. Fig. 2 is a front view illustrating the battery cell assembly of Fig. 1.

Referring to Fig. 1, before transporting a battery cell stack 10 included in the conventional battery module, both side surfaces of the battery cell stack 10 are pressed using a cell stack robot 40 in a state where the battery cell stack 10 is arranged on the stage 30. The cell stack robot 40 transports the battery cell stack 10 in a state where both side surfaces of the battery cell stack 10 are pressed, the cells included in the battery cell stack 10 are in close contact with each other by pressing, and thus, in the process of transporting the battery cell stack 10, it is possible to maintain its shape.

Referring to Fig. 2, a battery cell stack 10 included in a conventional battery module is formed by stacking a plurality of battery cells 11. At this time, the battery cell stack 10 can be formed such that a tape 12 is attached to individual battery cells 11 to stack a plurality of battery cells 11. However, as the number of battery cells included in the battery module increases and the weight increases, the risk of falling down of the battery cell stack 10 during the transport process may increase due to a stacking step d1 and a battery cell spacing d2 that occur when stacking the battery cells by attaching individual cell tapes.

### [DETAILED DESCRIPTION OF THE INVENTION]

### [Technical Problem]

It is an object of the present disclosure to provide a battery module with enhanced adsorption power, a battery pack including the same and a method of transporting the battery module.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack that is formed by stacking a plurality of battery cells, an insulating cover that covers both end parts of the battery cell stack, a holding member that wraps both end parts of the battery cell stack adjacent to the insulating cover, and an adhesive member that is disposed on an upper surface of the battery cell stack.

An adhesive material may be formed on one surface toward the battery cell stack among both surfaces of the adhesive member.

The battery module may further include an adsorption complementary layer formed on the other surface that is opposed to one surface toward the battery cell stack among both surfaces of the adhesive member.

The adsorption complementary layer may be formed of a porous polymer material.

The upper surface of the battery cell stack may form a step part, and the adhesive member may be formed along the step part.

The battery module may further include an adhesive tape that is disposed between mutually adjacent battery cells included in the battery cell stack.

The battery cell may include an electrode assembly and a cell case for housing the electrode assembly, and the mutually adjacent battery cells included in the battery cell stack may have a structure in which each cell case directly faces each other.

According to another embodiment of the present disclosure, there is provided a battery pack comprising: the battery module, a lower pack housing having a plurality of module regions in which a plurality of the battery modules are mounted, a heat conductive resin layer applied to the lower pack housing in the module region, and an upper pack housing for covering the plurality of battery modules, wherein the heat conductive resin layer is disposed between the battery module and the lower pack housing.

The plurality of module regions may be partitioned by a plurality of partition walls formed in the lower pack housing, and the partition wall may be disposed between adjacent battery modules among the plurality of battery modules.

According to another embodiment of the present disclosure, there is provided a method of transporting a battery module, the method comprising the steps of: stacking a plurality of battery cells in one direction to form a battery cell stack, forming an adhesive member on an upper part of the battery cell stack so as to cover one side of each of the plurality of battery cells, and disposing an adsorber on the adhesive member to transport a battery module including the battery cell stack to the adsorber.

The adsorber may be attached to the adhesive member in a direction perpendicular to the stacking direction of the battery cell stack.

The method of transporting a battery module may further include mounting the battery module directly in a lower pack housing having a plurality of module regions, wherein the plurality of module regions are partitioned by a plurality of partition walls, and the battery module is mounted between the partition walls adjacent to each other.

An adhesive material may be formed on one surface toward the battery cell stack among both surfaces of the adhesive member, and the adhesive member may fix the battery cells to each other.

### [ADVANTAGEOUS EFFECTS]

According to embodiments of the present disclosure, a tape is attached to the upper surface of the battery cell stack after stacking a plurality of battery cells, and the battery module including the battery cell stack is moved using an adsorber, thereby capable of reducing the risk of falling down pf the object to be transported during movement.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a view for explaining a method for transporting a battery cell assembly included in a conventional battery module;
Fig. 2 is a front view illustrating the battery cell assembly of Fig. 1;
Fig. 3 is a perspective view illustrating a battery module according to one embodiment of the present disclosure;
Fig. 4 is an exploded perspective view of the battery module of Fig. 3;
Fig. 5 is a view showing an adhesive member according to one embodiment of the present disclosure;
Fig. 6 is a perspective view of a battery cell included in the battery module of Fig. 3;
Fig. 7 is a view for explaining a method of transporting a battery module according to another embodiment of the present disclosure;
Fig. 8 is an enlarged view of the region A in Fig. 7; and
Fig. 9 is an exploded perspective view of a battery pack according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of the description, and the present disclosure is not necessarily limited to those illustrated in the drawings. In the drawings, the thickness of layers, regions, etc. are exaggerated for clarity. In the drawings, for convenience of the description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

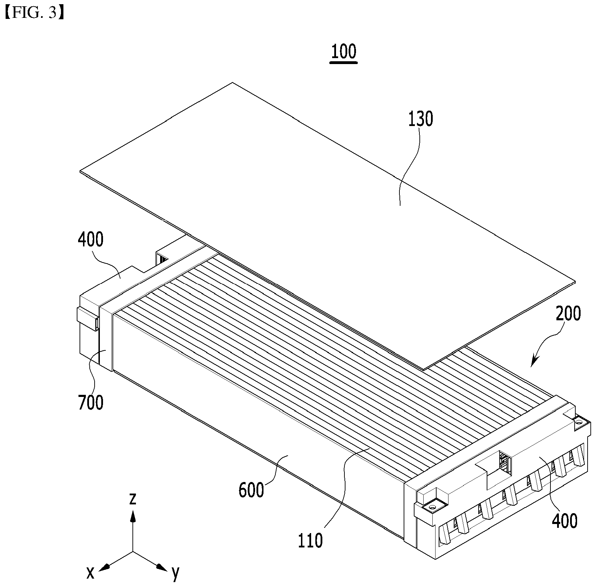

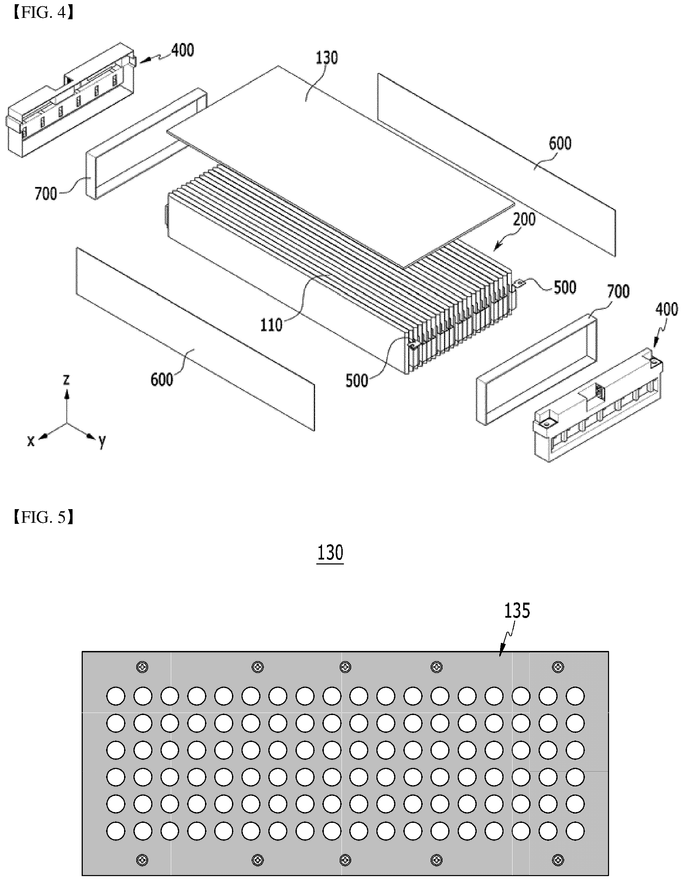

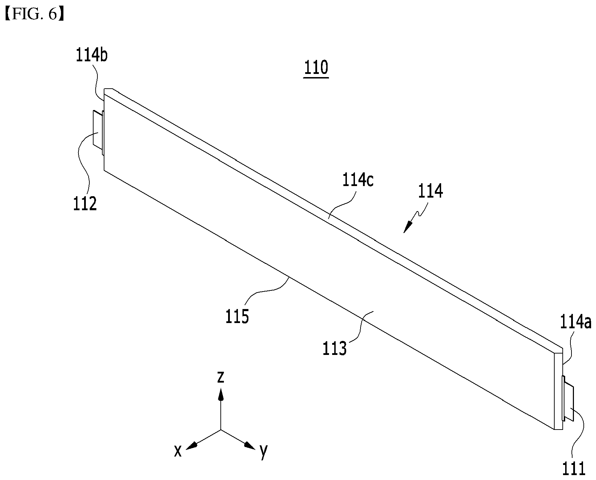

Fig. 3 is a perspective view illustrating a battery module according to one embodiment of the present disclosure. Fig. 4 is an exploded perspective view of the battery module of Fig. 3. Fig. 5 is a view showing an adhesive member according to one embodiment of the present disclosure. Fig. 6 is a perspective view of a battery cell included in the battery module of Fig. 3.

Referring to Figs. 3 to 6, a battery module 100 according to one embodiment of the present disclosure includes a battery cell stack 200 in which a plurality of battery cells 110 are stacked.

First, the battery cell 110 is preferably a pouch-type battery cell, and may be formed into a rectangular sheet-like structure. For example, the battery cell 110 according to the present embodiment includes two electrode leads 111 and 112, and has a structure in which the electrode leads 111 and 112 are disposed at positions in opposite directions to each other with respect to a cell body 113. The electrode leads 111 and 112 have a structure protruding from one end part 114a and the other end part 114b of the cell body 113, respectively. More specifically, the electrode leads 111 and 112 are connected to an electrode assembly (not shown) and protrude from the electrode assembly (not shown) to the outside of the battery cell 110. One of the two electrode leads 111 and 112 may be a positive electrode lead 111 and the other may be a negative electrode lead 112. That is, the positive electrode lead 111 and the negative electrode lead 112 can be disposed in opposite directions to each other with respect to the cell body 113.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts, the sealing part has a structure in which it is sealed by a method such as heat fusion, and the remaining other side part may be composed of a connection part 115. The cell case 114 may be composed of a laminate sheet including a resin layer and a metal layer.

Such battery cells 110 may be formed in plural numbers, and the plurality of battery cells 110 are stacked so as to be electrically connected to each other, thereby forming a battery cell stack 200. In particular, as shown in Fig. 6, the plurality of battery cells 110 may be stacked along the x-axis direction. Thereby, the electrode leads 111 and 112 can be protruded in the y-axis direction and the -y-axis direction, respectively.

Meanwhile, the battery module 100 according to the present embodiment can form a module-less structure in which the module frame and the metal end plate are removed, unlike a conventional battery module. Instead of the module frame, the battery module 100 according to the present embodiment may include a side face plate 600 and a holding band 700. As the module frame and the end plate are removed, complicated processes that require precise control, as in the process of housing the battery cell stack 200 inside the module frame, or the process of assembling module frames and end plates, is not necessary. Further, there is an advantage that the weight of the battery module 100 can be significantly reduced only by the removed module frame and end plate. Further, the battery module 100 according to the present embodiment has an advantage that re-workability is advantageous in the battery pack assembly process due to the removal of the module frame. In contrast, the conventional battery module could not be reworked even if a defect occurs due to the welding structure of the module frame.

The side face plate 600 is a plate-shaped member and can be disposed on both side surfaces of the battery cell stack 200 to complement the rigidity of the battery module 100. Such side face plate 600 has elastic properties and may include a plastic material manufactured by injection molding, and in some cases, a leaf spring material can be applied. The width of the side face plate 600 may be larger than the width of the battery cell 110. Here, the width of the side face plate 600 may mean a length in the z-axis direction.

A holding band 700 is a member that wraps the battery cell stack 200 at both end parts of the battery cell stack 200, and can perform the function of fixing the plurality of battery cells 110 and the side face plates 600 constituting the battery cell stack 200. After the battery cell stack 200 and the side face plate 600 are fixed via the holding band 700 in this way, an insulating cover 400 can be disposed on the front surface and the back surface of the battery cell stack 200 corresponding to the direction in which the electrode leads 111 and 112 protrude. Such a holding band 700 can be composed of a material having a predetermined elastic force, and specifically, a structure of a leaf spring can be applied.

As described above, in the battery module 100 according to the present embodiment, the end plate and the busbar frame can be removed, and instead an insulating cover 400 can be provided. On the other hand, the electrode leads of the battery cells 110 located outside the battery cell stack 200 may be electrically connected to a terminal busbar 500. Unlike conventional battery modules in which electrode leads are connected to each other via a busbar, the electrode leads 111 and 112 according to the present embodiment are directly joined to each other, a part of which is electrically connected to the terminal busbar 500, thereby forming an HV (High Voltage) connection. Therefore, in the HV connection structure according to the present embodiment, the busbar and the busbar frame on which the busbar is mounted can be removed. Here, the HV connection is for playing the role of a power source for supplying electric power, and means a connection between battery cells and a connection between battery modules.

On the other hand, the battery module 100 according to the present embodiment includes an adhesive member 130 that is disposed on the upper surface of the battery cell stack 200. An adhesive material may be formed on one surface toward the battery cell stack 200 among both surfaces of the adhesive member 130. The adhesive member 130 can replace the tape located between the battery cells 110 adjacent to each other, thereby reducing the risk of falling down of objects that may occur during transport of the battery module 100. The adhesive member 130 can serve to fix the battery cells 110 to each other.

As shown in Fig. 5, in the adhesive member 130 according to the present embodiment, an adsorption complementary layer 135 made of a porous polymer material can be formed on one surface which is opposed to the one surface toward the battery cell stack 200 among the two surfaces of the adhesive member 130. The porous polymer material may be formed of a material such as silicone or rubber.

The adsorption complementary layer 135 may be sponge-shaped as an example, and this adsorption complementary layer 135 may double the adsorption force at the time of forming vacuum in an adsorber described later. The adsorption complementary layer 135 according to the present embodiment may be adhered to the base surface of the adhesive member 130.

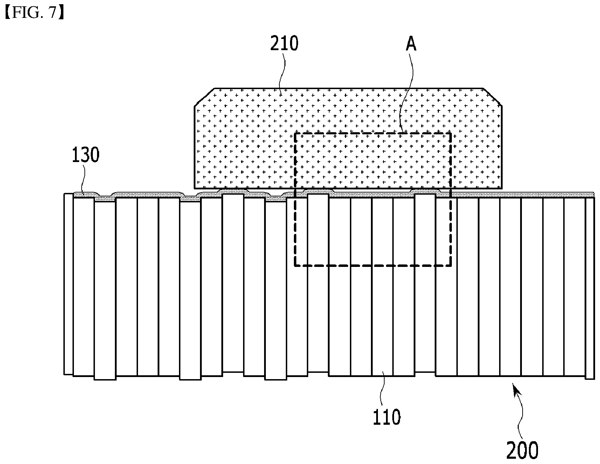

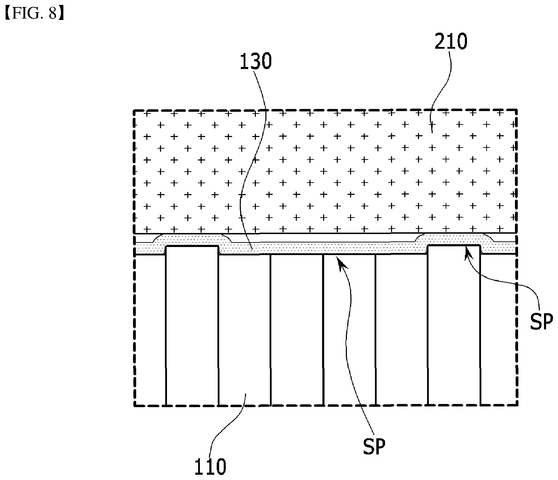

The upper surface of the battery cell stack 200 may have a step part that occurs when the battery cells 110 are stacked as shown in Figs. 7 and 8. An adhesive member 130 is formed along such a step part, thereby preventing the inflow of air due to the step part between the battery cells 110, and minimizing the influence in the transport process due to the stacking step and the battery cell spacing that occur when the battery cells 110 are stacked.

According to the present embodiment, mutually adjacent battery cells 110 included in the battery cell stack 200 may have a structure in which each cell case directly faces each other. According to a conventional case, it was structured such that an adhesive tape is formed between adjacent battery cells 110 to fix the battery cell stack 200, whereas but according to the present embodiment, an adhesive member can be formed on the upper surface of the battery cell stack 200 by completely or partially replacing the adhesive tape between the battery cells 110. However, the number of adhesive tapes between the battery cells 110 can be reduced or the area of the adhesive tape attached to the battery cells 110 can be reduced. In other words, the cell case of each of the battery cells 110 may be in close contact with each other without an adhesive tape, and in order to complement the adhesive member formed on the upper surface of the battery cell stack 200, an adhesive tape may be formed between the battery cells 110 or the adhesive tape can be formed in a form in which the area is reduced

Below, a method of transporting a battery module according to another embodiment of the present disclosure will be described with reference to Figs. 7 and 8.

Fig. 7 is a view for explaining a method of transporting a battery module according to another embodiment of the present disclosure. Fig. 8 is an enlarged view of the region A in Fig. 7.

Referring to Figs. 7 and 8, a method of transporting a battery module according to the present disclosure includes the steps of: stacking a plurality of battery cells 110 in one direction to form a battery cell stack 200, forming an adhesive member 130 on an upper part of the battery cell stack 200 so as to cover one side of each of the plurality of battery cells 110, and disposing an adsorber 210 on the adhesive member 130 to transport a battery module 100 including the battery cell stack 200 to the adsorber 210.

The adsorber 210 according to the present embodiment can be attached to the adhesive member 130 in a direction perpendicular to the stacking direction of the battery cell stack 200. In other words, as the adsorber 210 approaches the adhesive member 130 in a direction opposite to the direction indicated by the z-axis of Fig. 4, the adsorber 210 can be adsorbed to the adhesive member 130. The adsorber 210 may be a vacuum type.

The above-described transport step of the battery module 100 is performed, so that the battery module 100 can be mounted directly in the lower pack housing 1111 having a plurality of module regions shown in Fig 8, as will be described later.

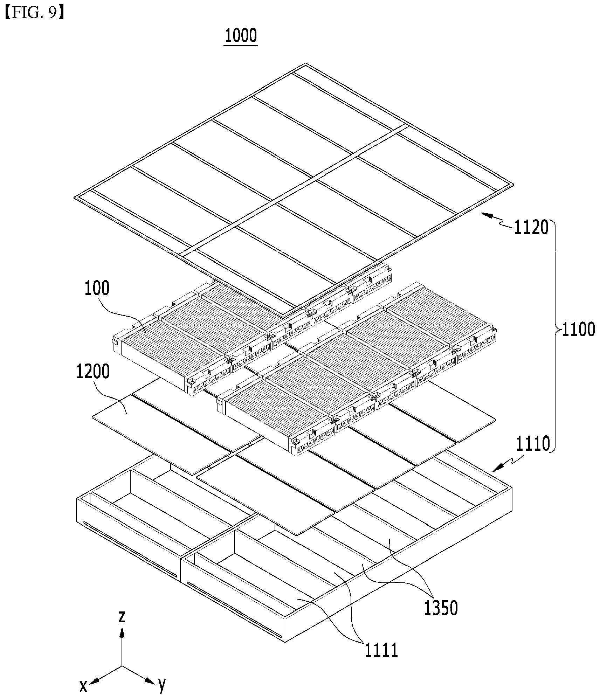

Fig. 9 is an exploded perspective view of a battery pack according to another embodiment of the present disclosure.

Referring to Fig. 9, a battery pack 1000 according to the present embodiment may include the battery module described with reference to Figs. 3 to 8, a pack frame 1100 for housing the battery module 100, and a heat conductive resin layer 1200 located between the battery module 100 and the bottom part 1111 of the pack frame 1100.

First, the battery module 100 includes an insulating cover as described above, and instead can form a module-less structure in which the module frame and the end plate are removed. A plurality of such battery modules 100 can be housed in the pack frame 1100 to form the battery pack 1000.

The pack frame 1100 may include a lower pack housing 1110 and an upper pack housing 1120 that covers the lower pack housing 1110, and a plurality of battery modules 100 may be disposed on the bottom part 1111 of the lower pack housing 1110. The lower pack housing 1110 has a plurality of module regions, and the plurality of module regions may be partitioned by a plurality of partition walls 1350 formed in the lower pack housing 1110. The partition wall 1350 is formed between battery modules 100 adjacent to each other among the plurality of battery modules 100. For example, the heat conductive resin layer 1200 includes a first heat conductive resin layer and a second heat conductive resin layer adjacent to each other, the plurality of module regions include a first region and a second region partitioned from each other by a partition wall 1350, the first heat conductive resin layer is formed so as to correspond to the first region, and the second heat conductive resin layer may be formed so as to correspond to the second region. At this time, the first heat conductive resin layer and the second heat conductive resin layer may be disposed separately from each other by the partition wall 1350.

Meanwhile, the heat conductive resin layer 1200 may be formed by applying a heat conductive resin to the bottom part 1111 of the lower pack housing 1110. The heat conductive resin may include a heat conductive adhesive material, and specifically, may include at least one of a silicone material, a urethane material, and an acrylic material. The heat conductive resin is a liquid during application but is cured after application, so that it can perform the role of fixing the battery module 100 to the lower pack housing 1110. Further, since the heat conductive resin has excellent heat transfer properties, heat generated from the battery cell 100 can be quickly transferred to the bottom part 1111, thereby preventing overheating of the battery pack 1000. In the battery module 100 according to this embodiment, because the module frame is eliminated, the lower surface of the battery cell stack 200 of Fig. 4 can be directly mounted on the heat conductive resin layer 1200 applied to the lower pack housing 1110. A lower surface of the battery cell stack 200 may come into contact with the heat conductive resin layer 1200. At this time, the battery cell stack 200 may be fixed to the lower pack housing 1110 by the heat conductive resin layer 1200 having adhesive performance.

As shown in Fig. 4, in the battery module 100 according to the present embodiment, a part of the battery cell 110 may be exposed to the outside in the module-less structure in which the module frame is removed, and it is essential to fix the exposed battery cell 110 for structural stability. Therefore, the battery pack 1000 according to the present embodiment can form a heat conductive resin layer capable of fixing the battery module 100, particularly, each battery cell 110 constituting the battery module 100, to the bottom part 1111, thereby improving structural stability. Further, by eliminating the module frame, the heat generated from the battery cells can be directly transferred from the heat conductive resin layer to the pack frame, thereby improving cooling efficiency. Although not shown, a heat sink structure may be formed on the pack frame.

The above-mentioned battery module and the battery pack including the same can be applied to various devices. Such a device may be applied to a vehicle means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present disclosure is not limited thereto, and numerous other modifications and embodiments can be made by those skilled in the art, which falls within the spirit and scope of the principles of the invention described in the appended claims.

### [Description of Reference Numerals]

110: battery cell
114: cell case
130: adhesive member
200: battery cell stack
210: adsorber
400: insulating cover
1350: partition wall

## Claims

1. A battery module comprising:
a battery cell stack that is formed by stacking a plurality of battery cells,
an insulating cover that covers both end parts of the battery cell stack,
a holding member that wraps both end parts of the battery cell stack adjacent to the insulating cover, and
an adhesive member that is disposed on an upper surface of the battery cell stack.

2. The battery module of claim 1, wherein:
an adhesive material is formed on one surface toward the battery cell stack among both surfaces of the adhesive member.

3. The battery module of claim 1,
which further comprises an adsorption complementary layer formed on the other surface that is opposed to one surface toward the battery cell stack among both surfaces of the adhesive member.

4. The battery module of claim 3, wherein:
the adsorption complementary layer is formed of a porous polymer material.

5. The battery module of claim 1, wherein:
the upper surface of the battery cell stack forms a step part, and the adhesive member is formed along the step part.

6. The battery module of claim 1,
which further comprises an adhesive tape that is disposed between mutually adjacent battery cells included in the battery cell stack.

7. The battery module of claim 1, wherein:
the battery cell comprises an electrode assembly and a cell case for housing the electrode assembly, and
the mutually adjacent battery cells included in the battery cell stack have a structure which each cell case directly faces each other.

8. A battery pack comprising:
the battery module of claim 1,
a lower pack housing having a plurality of module regions in which a plurality of the battery modules are mounted,
a heat conductive resin layer applied to the lower pack housing in the module region, and
an upper pack housing for covering the plurality of battery modules,
wherein the heat conductive resin layer is disposed between the battery module and the lower pack housing.

9. The battery pack of claim 8, wherein:
the plurality of module regions are partitioned by a plurality of partition walls formed in the lower pack housing, and the partition wall is disposed between adjacent battery modules among the plurality of battery modules.

10. A method of transporting a battery module, the method comprising the steps of:
stacking a plurality of battery cells in one direction to form a battery cell stack,
forming an adhesive member on an upper part of the battery cell stack so as to cover one side of each of the plurality of battery cells, and
disposing an adsorber on the adhesive member to transport a battery module including the battery cell stack to the adsorber.

11. The method of claim 10, wherein:
the adsorber is attached to the adhesive member in a direction perpendicular to the stacking direction of the battery cell stack.

12. The method of claim 10,
which further comprises mounting the battery module directly in a lower pack housing having a plurality of module regions,
wherein the plurality of module regions are partitioned by a plurality of partition walls, and the battery module is mounted between the partition walls adjacent to each other.

13. The method of claim 10, wherein:
an adhesive material is formed on one surface toward the battery cell stack among both surfaces of the adhesive member, and the adhesive member fixes the battery cells to each other.
